(19) Europäisches Patentamt
European Patent Office
Office européen des brevets

(11) Veröffentlichungsnummer: **0 096 196**
**B1**

(12) # EUROPÄISCHE PATENTSCHRIFT

(45) Veröffentlichungstag der Patentschrift: **02.01.85**

(21) Anmeldenummer: **83103746.0**

(22) Anmeldetag: **18.04.83**

(51) Int. Cl.³: **C 07 C 69/54,** C 07 C 67/03, C 07 C 67/08, C 07 C 67/14, C 08 F 220/40, C 08 F 283/02, C 08 F 299/04, C 08 L 51/08 // C09D3/64, C09D3/81

(54) **Methacrylsäureester als Reaktivverdünner für oxidativ vernetzbare Alkydharze und deren Herstellung.**

(30) Priorität: **29.04.82 DE 3215932**

(43) Veröffentlichungstag der Anmeldung: **21.12.83 Patentblatt 83/51**

(45) Bekanntmachung des Hinweises auf die Patenterteilung: **02.01.85 Patentblatt 85/1**

(84) Benannte Vertragsstaaten: **AT DE FR GB IT NL SE**

(56) Entgegenhaltungen:
**EP - A - 0 023 686**
**EP - A - 0 057 834**
**DE - A - 2 825 627**
**DE - A - 2 825 737**
**US - A - 4 141 868**
**US - A - 4 178 425**

**Patent Abstracts of Japan**
**Chemical Abstracts Band 92, Nr. 8, 25. Februar 1980, Columbus, Ohio, USA**
**Chemical Abstracts Band 83, Nr. 8, 25. August 1975, Columbus, Ohio, USA**

(73) Patentinhaber: **BAYER AG, Konzernverwaltung RP Patentabteilung, D-5090 Leverkusen 1 Bayerwerk (DE)**

(72) Erfinder: **Eimers, Erich, Dr., Kreuzbergstrasse 136, D-4150 Krefeld (DE)**
Erfinder: **Reuter, Knud, Dr., Buschstrasse 149, D-4150 Krefeld (DE)**
Erfinder: **Dhein, Rolf, Dr., Deswatinesstrasse 7, D-4150 Krefeld (DE)**
Erfinder: **Fleiter, Lothar, Dr., Bärenstrasse 7, D-4150 Krefeld (DE)**
Erfinder: **Kreiss, Eberhard, Ing. grad., Rather Strasse 22, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 096 196 B1

BUNDESDRUCKEREI BERLIN

**Beschreibung**

Die Erfindung betrifft neue Methacrylsäureester und die Verwendung von Methacrylsäureestern bestimmter Struktur als Reaktivverdünner für oxidativ vernetzbare Alkydharze.

Reaktivverdünner sind niedrigviskose Stoffe, die harzartige Bindemittel verdünnen und dadurch dem Lack die zu seiner Applikation notwendige Viskosität verleihen, zur Mischpolymerisation oder Mischkondensation mit dem Lackharz befähigte funktionelle Gruppen enthalten und beim Härtungsvorgang zum überwiegenden Teil — jeweils in Abhängigkeit von ihrer Flüchtigkeit — Bestandteil des gehärteten Lackfilms werden.

Ester der Acrylsäure und der Methacrylsäure sind als Reaktivverdünner, u. a. auch für Alkydharze, bereits empfohlen worden, waren bislang aber immer mit einem wesentlichen Nachteil — meist zu hohe Flüchtigkeit, mangelnde Reaktivität, Runzelbildung oder Vergilbungsneigung — behaftet.

Der nächstliegende Stand der Technik, die veröffentlichte japanische Patentanmeldung 54-126 293 betrifft lichthärtbare Harze, z. B. Alkydharze, mit einem Gehalt an Terpen-(meth)acrylaten. Diese Terpen(meth)acrylate erfüllen jedoch höhere Anforderungen hinsichtlich der Reaktivität, jedenfalls in Abwesenheit von Photoinitiatoren, nicht.

Gegenstand der Erfindung ist die Verwendung von Methacrylsäureestern der Formel

$$\begin{array}{c} \quad CH_3 \\ \quad | \\ CH_2{=}C{-}COOR \end{array} \qquad (I)$$

worin

R einen einwertigen, gegebenenfalls 1–2 Ether- und/oder Estergruppen enthaltenden, organischen Rest bedeutet, der frei von olefinischen Doppelbindungen ist, 10–24, vorzugsweise 10–18, C-Atome und

a) mindestens einen aromatischen Rest oder
b) mindestens einen cycloaliphatischen Rest enthält,

wobei im Falle des cycloaliphatischen Restes mindestens 8, vorzugsweise mindestens 10 C-Atome, Ring-C-Atome darstellen,

als Reaktivverdünner für oxidativ vernetzbare Alkydharze.

Weiterer Gegenstand der Erfindung sind Methacrylsäureester der Formel

$$\begin{array}{c} \quad CH_3 \\ \quad | \\ CH_2{=}C{-}COOR \end{array} \qquad (II)$$

worin

R für $R^1-A-R^2$ und

$R^1$ $(CH_2)_n$ $\begin{array}{c} CH \\ | \\ CH_3 \end{array}$ oder $\begin{array}{c} CH_3 \\ | \\ CH_2{-}C{-}CH_2 \\ | \\ CH_3 \end{array}$

A ein Sauerstoffatom, eine COO-Gruppe oder eine Einfachbindung,
n eine ganze Zahl von 1 bis 3 und
$R^2$ $\alpha$- oder $\beta$-Decalyl, Tricyclo[5.2.1.$0^{2,6}$]-dec-8- oder -9-yl oder Tricyclo[5.2.1.$0^{2,6}$]-dec-3- oder -4-ylmethyl bedeuten.

Bei dem erwähnten Tricyclodecylrest handelt es sich um die systematische Bezeichnung des einwertigen perhydrierten Restes des Dicyclopentadiens, wobei den einzelnen Kohlenstoffatomen die folgenden Positionen zukommen:

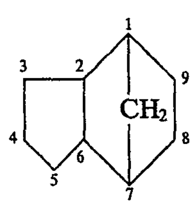

(III)

Weiterer Gegenstand der Erfindung ist ein Verfahren zur Herstellung der Methacrylsäureester (II) durch Veresterung von Methacrylsäure, durch Umsetzung von Methacryloylchlorid oder durch Umesterung von Methylmethacrylat mit $\alpha$- oder $\beta$-Decalol, mit Tricyclo[5.2.1.$0^{2.6}$]-decan-8- oder -9-ol oder mit Tricyclo[5.2.1.$0^{2.6}$]-decan-3- oder -4-ylmethanol.

Bevorzugte Methacrylsäureester I sind

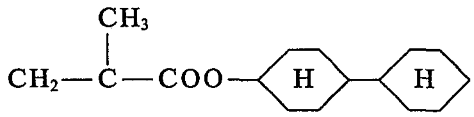

(IV)

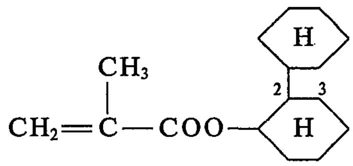

(V)

2- bzw. 3-Substitution

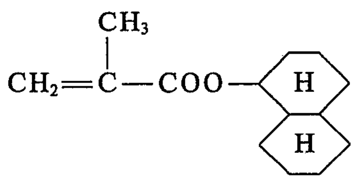

(VI)

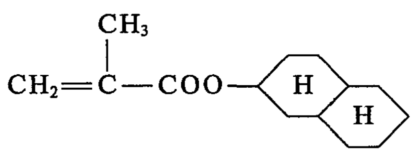

(VII)

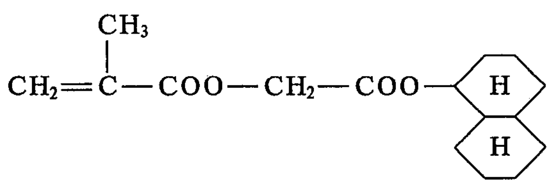

(VIII)

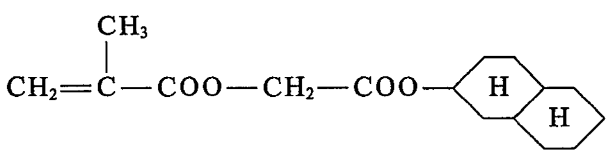

(IX)

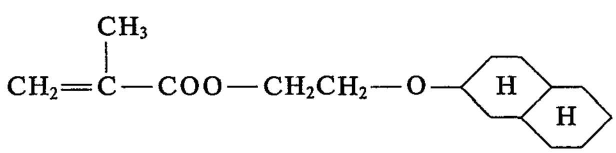

(X)

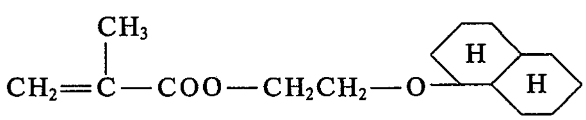

(XI)

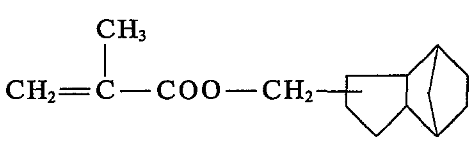

(XII)

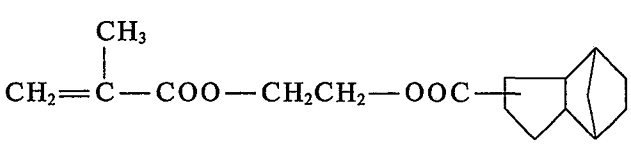

(XIII)

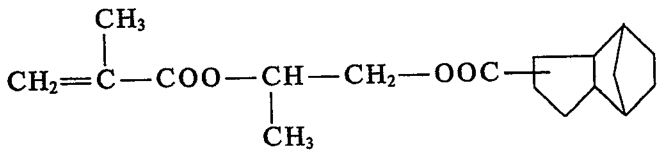

(XIV)

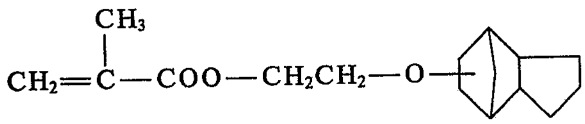

(XV)

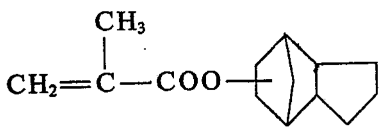

(XVI)

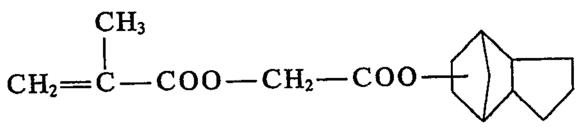

(XVII)

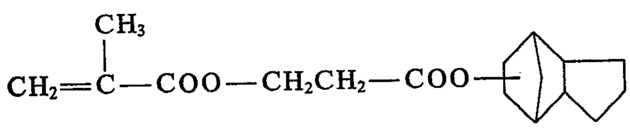

(XVIII)

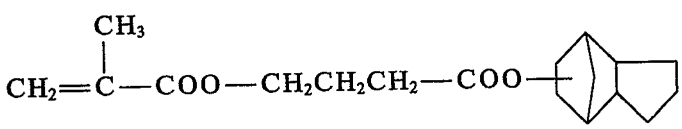

(XIX)

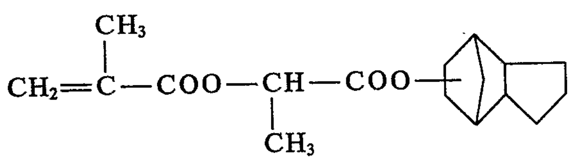

(XX)

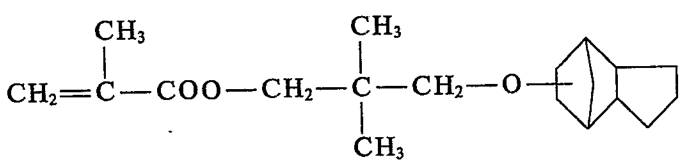

(XXI)

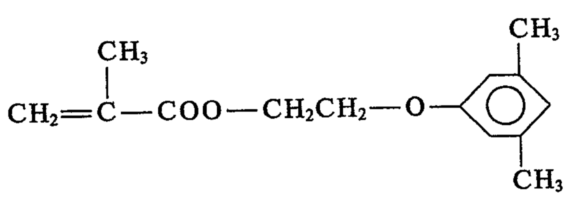

(XXII)

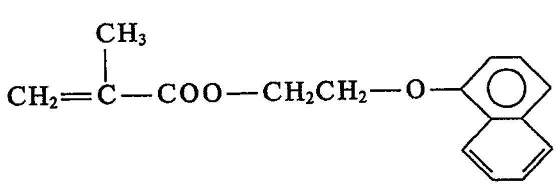

(XXIII)

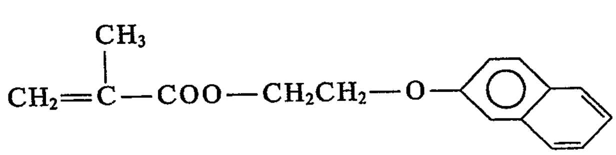

(XXIV)

Selbstverständlich wird der Fachmann als Reaktivverdünner für oxidativ vernetzbare Alkydharze solche Methacrylsäureester I auswählen, die unter Verarbeitungsbedingungen, d. h. z. B. bei 25°C, im Alkydharz in nichtkristallinem Zustand vorliegen. Besonders bevorzugte Reaktivverdünner I sind solche, deren Siedepunkt bei 0,5 Torr über 90°C liegt. Weiterhin sind bevorzugte Reaktivverdünner I solche, die mindestens zwei Ringe enthalten.

Für den Fall, daß der Substituent der Methacrylsäureester I keinen aromatischen Rest enthält und 10 oder 11 C-Atome besitzt, ist R vorzugsweise tricyclisch oder enthält einen tricyclischen Rest; vorzugsweise besitzt der Substituent R der Methacrylsäureester I mindestens 12 C-Atome, wenn R einen cycloaliphatischen Rest enthält.

Bevorzugte Methacrylsäureester II sind die Verbindungen V, VI, VIII bis XV, XVII bis XXI, XXIII und XXIV.

Die Herstellung der Methacrylsäureester II kann analog den in Methoden der Organischen Chemie (Houben-Weyl), 4. Auflage, Band VIII, Seiten 516–528 und 543–547, Georg Thieme Verlag, Stuttgart 1952, beschriebenen Verfahren erfolgen.

Unter »oxidativ vernetzbaren Alkydharzen« sind Polyester zu verstehen, die mit halbtrocknenden oder trocknenden Ölen oder deren Fettsäuren modifiziert sind; vgl. Ullmanns Encyclopädie der Technischen Chemie, 4. Auflage, Band 15, 616–625, Verlag Chemie, Weinheim 1978. Unter Polyestern versteht man durch Polykondensation nach bekannten Verfahren aus Alkoholen und Carbonsäuren hergestellte Polykondensate der Art, wie sie z. B. in Römpp's Chemielexikon, Band 1, S. 202, Franckh'sche Verlagsbuchhandlung, Stuttgart 1966, definiert oder in Ullmanns Encyclopädie der Technischen Chemie und in D. H. Solomon, The Chemistry of Organic Filmformers, S. 75–101, Robert E. Krieger Pub. Co., New York 1977, beschrieben sind.

Für die Synthese der Alkydharze bevorzugte Alkohole sind aliphatische, cycloaliphatische und/oder araliphatische Alkohole mit 1–22, vorzugsweise 2–6 C-Atomen, und 1–6, vorzugsweise 1–4, an nichtaromatische C-Atome gebundenen OH-Gruppen pro Molekül, z. B. Glykole, wie Ethylenglykol, Propandiol-1,2 und -1,3, Butandiol-1,2, -1,3, und -1,4,2-Ethyl-propandiol-1,3, 2-Ethylhexandiol-1,3, Neopentylglykol, Hexandiol-1,6, Cyclohexandiol-1,2 und -1,4, 1,2- und 1,4-Bis-(hydroxymethyl)-cyclohexan, Adipinsäure-bis-(ethylenglykolester); Etheralkohole wie Di- und Triethylenglykol, Dipropylenglykol; oxethylierte und perhydrierte Bisphenole; Butantriol-1,2,4, Hexantriol-1,2,6, Trimethylolethan, Trimethylolpropan, Glycerin, Pentaerythrit, Dipentaerythrit, Mannit und Sorbit; kettenabbrechende Alkohole mit 1 bis 7 Kohlenstoffatomen wie Propanol, Butanol, Cyclohexanol und Benzylalkohol. Die gebräuchlichsten Alkohole sind Glycerin, Trimethylolpropan, Propylenglykol und Pentaerythrit.

Für die Synthese der Alkydharze bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Endomethylentetrahydrophthalsäure, Bernsteinsäure, Adipinsäure, Sebacinsäure, Trimellithsäure und Trimellithsäureanhydrid, Pyromellithsäureanhydrid und Maleinsäure, Phthalsäureanhydrid ist die gebräuchlichste Säurekomponente.

Für die Herstellung der Alkydharze bevorzugte Monocarbonsäuren sind aliphatische, cycloaliphatische gesättigte und ungesättigte und/oder aromatische Monocarbonsäuren mit 3–24 C-Atomen pro Molekül wie Benzoesäure, p-tert.-Butylbenzoesäure, Tolylsäure, Hexahydrobenzoesäure und Abietinsäure.

Die Öllänge der Alkydharze, berechnet als Triglycerid und bezogen auf das Alkydharz, kann 20 bis 90, vorzugsweise 24 bis 70 Gew.-%, betragen. Die trocknenden oder halbtrocknenden Fettsäuren, die im allgemeinen 6 bis 24 C-Atome enthalten, können entweder als solche oder in Form ihrer Glycerinester (Triglyceride) eingesetzt werden.

Bevorzugt sind pflanzliche und tierische Öle, Fette oder Fettsäuren, wie z. B. Sonnenblumen-, Erdnuß-, Holz-, Oliven-, Sojabohnen-, Oiticica-, Lein-, Baumwollsaat-, Saffloröl oder -ölfettsäuren, dehydratisiertes Ricinusöl bzw. -fettsäuren, einfach ungesättigte Fettsäuren, Schmalz, Talg und Trane, Tallölfettsäure sowie synthetische Fettsäuren, die durch Konjugierung oder Isomerisierung aus natürlichen ungesättigten Ölen oder Fettsäuren hergestellt sein können.

Unter » oxidativ vernetzbaren Alkydharzen« sollen hier auch solche mit trocknenden oder halbtrocknenden Ölen oder Fettsäuren modifizierten Polyester verstanden werden, die (mit oder ohne Aminoplastharzen) eingebrannt werden.

Das als Zahlenmittel bestimmte Molekulargewicht der Alkydharze beträgt 2000–10000 (bis zu Molekulargewichten von 5000 dampfdruckosmometrisch bestimmt in Dioxan und Aceton, wobei bei differierenden Werten der niedrigere Wert als korrekt angesehen wird; bei Molekulargewichten über 5000 membranosmometrisch in Aceton bestimmt).

Für die Verwendung als Reaktivverdünner werden die Methacrylsäureester I mit den oxidativ vernetzbaren Alkydharzen vorzugsweise in einem Verhältnis von

45 bis 95, insbesondere 65 bis 95, Gew.-% Alkydharz und
5 bis 55, insbesondere 5 bis 35, Gew.-% Methacrylsäureester I gemischt.

Neben den erfindungsgemäß zu verwendenden Methacrylsäureestern I können bis zu 10 Gew.-%, bezogen auf oxidativ vernetzbares Alkydharz, Bismethacrylate von Diolen mit 2 bis 12 C-Atomen eingesetzt werden, wie z. B. Ethylenglykolbis(methacrylat), Butandiol-1,4-bis(methacrylat), Neopentylglykolbis(methacrylat) und Hexandiol-1,6-bis(methacrylat). Auch Trismethacrylate wie Trimethylolpropan-trismethacrylat können in diesen Mengen zugesetzt werden.

Zur Verbesserung der Lagerstabilität können die Lacksysteme Inhibitoren, wie z. B. Hydrochinon, Hydrochinon-monomethylether, Toluhydrochinon, Trimethylhydrochinon, Benzochinon, Benzkatechin oder Phenothiazin enthalten.

Die Härtung der Lacke erfolgt, wie in der Alkydharztechnologie üblich, bei Raumtemperatur oder bei erhöhter Temperatur, z. B. 60 bis 80°C, unter Zusatz üblicher Metallsikkative wie Kobalt, Blei, Mangan, Zirkon, Calcium, Barium, Eisen in Form ihrer löslichen Salze, z. B. der 2-Ethyl-hexanoate oder der Naphthenate.

Den Lacksystemen können die aus der Lackharztechnologie bekannten Hilfsstoffe, z. B. Hautverhinderungsmittel, Verlaufmittel, Thixotropiermittel, Farbstoffe sowie Pigmente zugesetzt werden.

Weiterhin ist es selbstverständlich möglich, den Mischungen aus Alkydharz und Reaktivverdünner zur Einstellung einer geeigneten Verarbeitungsviskosität Lösemittel, wie sie in der Alkydharztechnologie üblich sind, zuzufügen, z. B. aliphatische Kohlenwasserstoffe (Benzine), Aromaten wie Toluol, Xylol, Ester, wie Ethylacetat, Butylacetat, Etherester wie Ethylglykolacetat, Hydroxycarbonsäureester wie Glykolsäurebutylester usw.

Die Mischungen aus Alkydharz und Reaktivverdünner eignen sich zur Herstellung von Überzügen (Grundierungen oder Decklackierungen) auf den verschiedensten Untergründen, wie z. B. Holz, Metall oder Kunststoffen.

Die in den nachfolgenden Beispielen genannten Teile sind Gewichtsteile; Prozentangaben beziehen sich auf das Gewicht.

Die in den nachfolgenden Beispielen enthaltenen Angaben über die Trocknung erfolgten nach einer betriebsinternen Skala wobei mit fortschreitender Trocknung die Werte abfallen. Ein Wert von 2 bis 2+ entspricht dem Begriff »staubtrocken«, ein Wert von Null dem Begriff »klebfrei« der DIN 53 150.

## Beispiel 1

### a) Chloressigsäure-decalylester

189 g Chloressigsäure (2 M) und 339 g Decalol-2 (2,2 M) wurden mit 10 g p-Toluolsulfonsäure und 180 ml Toluol azeotrop bei 110–135°C am Wasserabscheider verestert. Nach Ende der Wasserabspaltung wurde mit Wasser gesättigter Natriumbicarbonat-Lösung und wieder mit Wasser neutral gewaschen, getrocknet und destilliert. Bei 110–118°C/0,3 Torr gingen 313 g Chloressigsäuredecal-2-ylester, $n_D^{20} = 1{,}4952$, über.

### b) Methacrylsäureester von Glykolsäuredecal-2-ylester

102,6 g Chloressigsäure-decal-2-ylester 1 a) (0,48 M) 52,3 g Natriummethacrylat (0,48 M), 1,55 g Triethylamin und 1,94 g Toluhydrochinon wurden 48 Stunden bei 120°C gerührt. Nach Verdünnen mit Toluol wurde filtriert und destilliert. Bei 100–120°C/0,3 Torr gingen 70,8 g des gewünschten Methacrylsäureesters IX, $n_D^{20} = 1{,}4852$, über.

### c) Gemisch aus Alkydharz/Methacrylester IX

23,5 Teile Alkydharz auf Basis Sojaölfettsäure (Ölgehalt 48%, Gehalt an Phthalsäureresten – berechnet als Anhydrid: 26%), 9,5 Teile Testbenzin und 10 Teile des Methacrylsäureesters IX wurden gemischt und mit 0,28 Teilen Cobaltoctoat-Lösung (in Toluol, 6% Metallgehalt), 1,4 Teilen Bleioctoat-Lösung (in Toluol, 24% Metallgehalt) und 0,50 Teilen Hautverhinderungsmittel auf Butanonoxim-Basis versetzt.

Mit Hilfe einer Filmziehhantel (Spalthöhe 120 μm) wurden auf Glasplatten Klarlacke aufgebracht, die nach 7 Stunden klebfrei aufgetrocknet waren. Vergilbung und Runzelung traten nicht auf.

## Beispiel 2

83 g Hydroxymethyl-tricyclo-[5.2.1.$0^{2.6}$]-decan (Gemisch der 3- und 4-Isomeren) (0,5 M) und 52,5 g 90%ige wäßrige Methacrylsäure (0,55 M) wurden mit 2,5 g p-Toluolsulfonsäure, 1,78 g Hydrochinon und 150 ml Toluol azeotrop am Wasserabscheider bei 125°C verestert. Nach dem Ende der Wasserabspaltung wurde mit 200 ml Diethylether aufgenommen, mit 5%iger wäßriger Kochsalzlösung, 2%iger wäßriger Natronlauge und wieder 5%iger wäßriger Kochsalzlösung gewaschen, über Natriumsulfat getrocknet, filtriert und destilliert. Bei 92°C/0,07 Torr gingen 86,3 g 3(4)-Methacryloyl-oxymethyl-tri-

cyclo-[5.2.1.$0^{2.6}$]-decan über ($n_D^{20}$ = 1,4983).

Filme aus einem Gemisch von 23,5 Teilen des Alkydharzes aus Beispiel 1 c), 10 Teilen des obigen Methacrylsäureesters und 9,5 Teilen Testbenzin sikkativiert mit 0,28 Teilen Cobaltoctoat-Lösung (in Toluol, 6% Metallgehalt), 1,4 Teilen Bleioctoat-Lösung (in Toluol, mit 24% Metallgehalt) sowie 0,38 Teilen Hautverhinderungsmittel auf Butanonoxim-Basis, trockneten vergilbungs- und runzelfrei bei 100%igem Verbleib des Methacrylsäureesters im Film (Filmziehhantel mit 90 µm Spalthöhe, Aufzug auf Glas). Ebenso verhielten sich Gemische aus 24,8 Teilen eines langöligen Alkydharzes auf Sojaölfettsäure-Basis (Ölgehalt 66%, Gehalt an Phthalsäureresten, berechnet als Anhydrid: 25%), 10 Teilen des obigen Methacrylsäureesters und 8,2 Teilen Testbenzin, sikkativiert mit 0,23 Teilen Cobaltoctoat-Lösung (in Toluol, 6% Metallgehalt), 0,58 Teilen Bleioctoat-Lösung (in Toluol, 24% Metallgehalt), 0,87 Teilen Calciumoctoat-Lösung (in Toluol, 4% Metallgehalt) sowie 0,87 Teilen Hautverhinderungsmittel auf Butanonoxim-Basis (Filmziehhantel mit 90 µm Spalthöhe, Aufzug auf Glas).

## Beispiel 3

### a) (2-Hydroxy)ethoxy-tricyclo-[5.2.1.$0^{2.6}$]-decan (Gemisch der 8- und 9-Isomeren)

Zu 248,3 g wasserfreiem Ethylenglykol (4 M) und 7,1 g Bortrifluorid-etherat wurden bei 110°C in ca. 5 Stunden 134,2 g Tricyclo-[5.2.1.$0^{2.6}$]-dec-8-en (1 M) getropft. Nach 3 Stunden Nachreaktion bei 110—120°C wurden bei Raumtemperatur 7 ml konzentrierter wäßriger Ammoniak zugetropft, ca. 40 ml Wasser und ca. 200 ml Hexan zugegeben und die organische Phase dreimal mit ca. 40 ml Wasser gewaschen. Hexan wurde im Wasserstrahlvakuum entfernt und der Rückstand destilliert. Bei 102—110°C/0,45 Torr gingen 109,8 g des gewünschten Produktes ($n_D^{20}$ = 1,5014) über, bei 110—125°C/0,4 Torr weitere 17,6 g ($n_D^{20}$ = 1,5020).

### b) Methacrylsäureester von (2-Hydroxy)-ethoxy-tricyclo-[5.2.1.$0^{2.6}$]-decan (Gemisch der 8- und 9-Isomeren)

65,4 g (2-Hydroxy)ethoxy-tricyclodecan 3 a) (0,33 M) 34,4 g 90%ige wäßrige Methacrylsäure (0,36 M), 1,4 g p-Toluolsulfonsäure, 0,23 g Hydrochinon, 0,23 g Hydrochinon-monomethylether und 75 g n-Heptan wurden bis zum Ende der Wasserabspaltung bei 110°C azeotrop am Wasserabscheider umgesetzt. Nach Abkühlen wurde mit 20%iger wäßriger Natriumcarbonat-Lösung und dreimal mit Wasser gewaschen und über Natriumsulfat getrocknet. Nach Entfernung des Heptans im Wasserstrahlvakuum wurde das Produkt mit 500 ppm Hydrochinon stabilisiert und destilliert. Bei 107—112°C/0,2 Torr gingen 64,3 g des gewünschten Produktes ($n_D^{20}$ = 1,4924) über.

### c) Gemisch aus Alkydharz und Reaktivverdünner aus Beispiel 3 b)

60 Teile Alkydharz auf Basis Sojaölfettsäure (Ölgehalt 66%, Gehalt an Phthalsäureresten — berechnet als Anhydrid: 25%) und 7,2 Teile des Methacrylsäureesters aus Beispiel 3 b) wurden gemischt und mit 0,45 Teilen Cobaltoctoat-Lösung (in Toluol, Metallgehalt 6%), 2,24 Teilen Bleioctoat-Lösung (in Toluol, Metallgehalt 24%), 3,36 Teilen Calciumoctoat-Lösung (in Toluol, Metallgehalt 4%) und 1,01 Teilen Hautverhinderungsmittel auf Butanonoxim-Basis versetzt.

Mit Hilfe einer Filmziehhantel (Spalthöhe 120 µm) wurden Klarlacke auf Glasplatten aufgestrichen. Nach Klebfreitrocknung waren die Filme vergilbungs- und runzelfrei; 100% des Methacrylsäureesters waren im Film verblieben.

## Beispiel 4

23,5 Teile des Alkydharzes aus Beispiel 1 c), 10 Teile Decalyl-2-methacrylat und 9,5 Teile Testbenzin wurden gemischt und mit 0,28 Teilen Cobaltoctoat-Lösung (in Toluol, Metallgehalt 6%), 1,4 Teilen Bleioctoat-Lösung (in Toluol, Metallgehalt 24%) und 0,50 Teilen Hautverhinderungsmittel auf Butanonoxim-Basis versetzt.

Mit Hilfe einer Filmziehhantel (Spalthöhe 120 µm) wurden Klarlacke auf Glasplatten aufgestrichen. Nach Klebfreitrocknung waren die Filme vergilbungs- und runzelfrei; 100% des Methacrylsäureesters waren im Film verblieben.

## Beispiel 5

### a) Tricyclo-[5.2.1.$0^{2.6}$]-decan-carbonsäure-(2-hydroxypropyl)ester (Gemisch der 3- und 4-Isomeren)

Zu 360 g Tricyclo-[5.2.1.$0^{2.6}$]-decen-3(4)-carbonsäure (2 M) und 14,3 g Hexamethylendiamin wurden bei 90°C unter Stickstoff in 2 Stunden 127,6 Propylenoxid getropft, wodurch die Temperatur bis

auf 75°C absank. Nach 5 1/2 Stunden bei 75–90°C wurde auf Raumtemperatur abgekühlt und 2 Stunden Wasserstrahlvakuum angelegt. Anschließend wurde destilliert. Bei 160°C/0,7 Torr gingen 320,2 g des gewünschten Produktes über ($n_D^{20}$ = 1.5003).

b) Methacrylsäureester von Tricyclo-[5.2.1.$0^{2.6}$]-decan-carbonsäure-(2-hydroxypropyl)-ester (Gemisch der 3- und 4-Isomeren)

119 g des Tricyclo-[5.2.1.$0^{2.6}$]-decan-3(4)-carbonsäure-(2-hydroxypropyl)-esters (0,5 M), 96 g 90%ige wäßrige Methacrylsäure (1,0 M) 3 g p-Toluolsulfonsäure, 0,5 g Hydrochinon und 0,5 g Hydrochinonmonomethylether wurden in 150 g Heptan azeotrop bei 110°C am Wasserabscheider bis zum Ende der Wasserabspaltung verestert. Die Reaktionslösung wurde filtriert, mit Wasser säurefrei gewaschen und im Wasserstrahlvakuum vom Heptan befreit. Rückstand: 89,2 g.

c) Gemisch aus Alkydharz/Reaktivverdünner nach Beispiel 5 b)

60 Teile des Alkydharzes aus Beispiel 2 c, 7,2 Teile des Methacrylsäureesters aus Beispiel 5 b) und 40 Teile Testbenzin wurden gemischt und die Lösung nach derselben Rezeptur wie in Beispiel 3 c zu einem Klarlack verarbeitet. Mit Hilfe einer Filmziehhantel (Spalthöhe 120 µm) wurden die Klarlacke auf Glasplatten aufgestrichen. Nach Klebfreitrocknung waren die Filme vergilbungs- und runzelfrei; 100% des Methacrylsäureesters waren im Film verblieben.

## Beispiel 6

24 Teile des Alkydharzes aus Beispiel 1 c), 9 Teile Testbenzin und 10 Teile Methacrylsäure-(4-tert.-butylcyclohexyl)ester wurden gemischt, analog der Rezeptur des Beispiels 1 c) sikkativiert und der Klarlack mit einer Filmziehhantel (Spalthöhe 120 µm) auf Glasplatten aufgezogen. Nach Klebfreitrocknung waren die Filme frei von Runzeln und zeigten keine über das reine Alkydharz hinausgehende Vergilbung.

## Beispiel 7

Verwendung von Methacrylsäureester XVI als Reaktivverdünner

Als Alkydharz wurde das Handelsprodukt der Firma Bayer AG (R)Alkydal F 48 eingesetzt (Öllänge ca. 48%), Viskosität 8500 mPas in handelsüblicher Lieferform (Benzin/Xylol-Gemisch 38:7) mit 55% Festgehalt. Aus diesem Alkydharz wurde unter Verwendung des Reaktivverdünners XVI ein Weißlack folgender Zusammensetzung hergestellt:

| | |
|---|---|
| 182 Teile | Alkydal F 48, Lieferform, |
| 65 Teile | Titandioxid-Rutil, |
| 30 Teile | Reaktivverdünner XVI, |
| 1,5 Teile | Xylol, |
| 1,5 Teile | Testbenzin, |
| 1,5 Teile | Hautverhinderungsmittel, |
| 1,3 Teile | Cobaltoctoatlösung (in Toluol, 6% Metallgehalt), |
| 5,5 Teile | Bleioctoatlösung (in Toluol, 24% Metallgehalt), |
| 2,5 Teile | Calciumoctoatlösung (in Toluol, 4% Metallgehalt), |
| 3 Teile | Siliconöl (10%ig in Xylol) |

Viskosität entsprechend einer Auslaufzeit von 95 sec im DIN-Becher Nr. 4 bei 20°C.

## Beispiel 8

Es wurde zur Herstellung eines Weißlackes die gleiche Rezeptur benutzt wie in Beispiel 7 mit dem Unterschied, daß anstelle des Reaktivverdünners XVI 35 Teile des Reaktivverdünners XV eingesetzt wurden. Es resultierte ein Lack mit einer Viskosität entsprechend einer Auslaufzeit von 90 sec – gemessen im DIN Becher Nr. 4 bis 20°C.

Mit diesen Lacken wurden die im folgenden aufgeführten anwendungstechnischen Prüfungen durchgeführt.

Als Vergleichssubstanz wurde ein analog aufgebauter Weißlack eingesetzt, der statt des Reaktivverdünners XVI die Verbindung

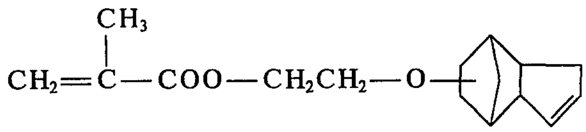 (XXV)

enthielt.

1. Trocknung

Schichtdicke 50–55 μm

| Reaktiv-verdünner | Zeit (Stunden) | | | | | | | | |
|---|---|---|---|---|---|---|---|---|---|
| | 0,5 | 1 | 1,5 | 2,5 | 3,5 | 4,5 | 5,5 | 6,5 | 7,5 |
| XVI | 5 | 4–5 | 4+ | 3 | 1 | 0–1 | 0– | 0 | 0 |
| XV | 5 | 4–5 | 4 | 4–3 | 3 | 2+ | 1 | 0–1 | 0 |
| XXV | 5 | 4 | 4+ | 3– | 2+ | 1 | 0–1 | 0 | 0 |

2. Wärmetrocknung

1 Stunde, 60°C; Schichtdicke 55 μm

| Reaktiv-verdünner | Glanz | Nagelhärte | | Durchtrocknung | |
|---|---|---|---|---|---|
| | | sofort | 1 Tag | sofort | nach 1 Tag |
| XV | brilliant | 3 | 2–3 | 2+ | 1–2 |
| XVI | brilliant | 3–4 | 2–3 | 2+ | 1– |
| XXV | Runzelbildung | | | | |

3. Elastizität nach Erichsen [mm]

| Reaktivverdünner | sofort | nach 5 Tagen | nach 10 Tagen |
|---|---|---|---|
| XV | 9,0 | 9,0 | 9,0 |
| XVI | 9,0 | 9,0 | 8,4 |
| XXV | 9,0 | 8,8 | 7,4 |

4. Überspritzbarkeit

Alle Lacke sind nach 16 Stunden überspritzbar.

5. Weißgrad nach A. Berger (Die Farbe, 8. Jahrgang, S. 187 ff., 1959)

| Reaktivverdünner | sofort | nach 16 Stunden/70°C | nach 32 Stunden/70°C |
|---|---|---|---|
| XV | 72,4 | 65,0 | 63,1 |
| XVI | 72,4 | 64,4 | 62,9 |
| XXV | 72,4 | 59,9 | 57,4 |

## Beispiel 9

Verwendung der Methacrylsäureester IV und XXIII als Reaktivverdünner.

Alkydharz:

Unter Verwendung von 24 Teilen Phthalsäureanhydrid, 44 Teilen Sojaölfettsäure und 23 Teilen Pentaerythrit wurde ein Alkydharz mit einer Säurezahl von 6 und einer Viskosität entsprechend einer Auslaufzeit von 53 sec., gemessen im DIN-Becher Nr. 4 bei 20°C als Xylollösung mit einem Festgehalt von 60%, hergestellt.

Aus dieser Alkydharzlösung wurde unter Verwendung der obengenannten Reaktivverdünner ein Weißlack folgender Zusammensetzung hergestellt:

| | |
|---|---|
| Alkydharz (100%ig) | 76,5 Teile |
| Benzin | 4,75 Teile |
| Ethylglykolacetat | 20,25 Teile |
| Reaktivverdünner IV | 17,63 Teile |
| Reaktivverdünner XXIII | 5,88 Teile |
| Titandioxid-Rutil | 70 Teile |
| Bentonit (10%ige Aufquellung) | 3,5 Teile |
| Calciumoctoat (in Toluol, 4% Metallgehalt) | 5 Teile |
| Cobaltoctoat (in Toluol, 6% Metallgehalt) | 0,66 Teile |
| Bleioctoat (in Toluol, 24% Metallgehalt) | 3,32 Teile und |
| Hautverhinderungsmittel | 1,5 Teile. |

Dieser Lack wurde mit 3,11 Teilen eines Lösungsmittel-Gemisches aus Benzin (Kp. 180—210°C), Terpentin und Aromatengemisch (Kp. 160—200°C) im Verhältnis 19:4:7 auf eine Viskosität entsprechend einer Auslaufzeit von 150 sec. im DIN-Becher Nr. 4 bei 20°C gebracht. Der Festkörpergehalt des Lackes betrug 81%.

Mit dem erhaltenen Lack wurden die folgenden anwendungstechnischen Prüfungen durchgeführt.

1. Trocknung

| Staubtrocken nach | Klebfrei nach | Durchtrocknung nach 24 Stunden | Durchtrocknung nach 48 Stunden |
|---|---|---|---|
| 3,5 Stunden | 6,0 Stunden | 1+ | 0—1 |

2. Pendelhärte (sec)

Filmdicke ca. 60 μm

| 24 Stunden | 48 Stunden | 72 Stunden |
|---|---|---|
| 24 | 27 | 28 |

3. Verarbeitungstechnische Eigenschaften

Filmdicke 45–55 μm

| Verstreichbarkeit | Verlauf | Ablaufneigung | Glanz |
|---|---|---|---|
| gut | gut | nicht | brillant |

4. Erichsen-Tiefung [mm]

| Sofort | Nach 3 Tagen |
|---|---|
| 9,7 | 9,5 |

**Patentansprüche**

1. Verwendung von Methacrylsäureestern der Formel

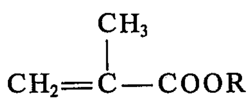

(I)

worin

R einen einwertigen, gegebenenfalls 1–2 Ether- und/oder Estergruppen enthaltenden, organischen Rest bedeutet, der frei von olefinischen Doppelbindungen ist, 10–24 C-Atome und

a) mindestens einen aromatischen Rest oder
b) mindestens einen cycloaliphatischen Rest enthält, wobei im Falle des cycloaliphatischen Restes mindestens 8 C-Atome Ring-C-Atome darstellen,

als Reaktivverdünner für oxidativ vernetzbare Alkydharze.

2. Verwendung nach Anspruch 1, dadurch gekennzeichnet, daß R 10–18 C-Atome enthält.

3. Verwendung nach Ansprüchen 1 und 2, dadurch gekennzeichnet, daß im Falle des cycloaliphatischen Restes mindestens 10 C-Atome Ring-C-Atome darstellen.

4. Methacrylsäureester der Formel

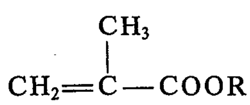

(II)

worin

R für $R^1$–A–$R^2$ steht und

$R^1$ $(CH_2)_n$ 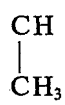 oder 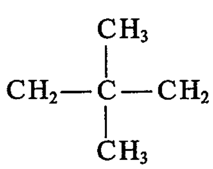

A ein Sauerstoffatom, eine COO-Gruppe oder eine Einfachbindung,
n eine ganze Zahl von 1 bis 3 und
$R^2$ α- oder β-Decalyl, Tricyclo[5.2.1.0$^{2.6}$]-dec-8- oder -9-yl oder Tricyclo[5.2.1.0$^{2.6}$]-dec-3- oder -4-ylmethyl bedeuten.

5. Verfahren zur Herstellung der Methacrylsäureester nach Anspruch 4 durch Veresterung von Methacrylsäure mit α- oder β-Decalol, mit Tricyclo-[5.2.1.0$^{2.6}$]-decan-8- oder -9-ol oder mit Tricyclo-[5.2.1.0$^{2.6}$]-decan-3- oder -4-ylmethanol.

6. Verfahren zur Herstellung der Methacrylsäureester nach Anspruch 4 durch Umsetzung von Methacryloylchlorid mit $\alpha$- oder $\beta$-Decalol, mit Tricyclo-[5.2.1.$0^{2.6}$]-decan-8- oder -9-ol oder mit Tricyclo[5.2.1.$0^{2.6}$]-decan-3- oder 4-ylmethanol.

7. Verfahren zur Herstellung des Methacrylsäureesters nach Anspruch 4 durch Umesterung von Methylmethacrylat mit $\alpha$- oder $\beta$-Decalol, mit Tricyclo-[5.2.1.$0^{2.6}$]-decan-8- oder -9-ol oder mit Tricyclo-[5.2.1.$0^{2.6}$]-decan-3- oder -4-ylmethanol.

## Claims

1. Use of methacrylic acid esters of the formula

$$CH_2{=}\overset{\displaystyle CH_3}{\overset{|}{C}}{-}COOR \qquad (I)$$

wherein

R denotes a monovalent organic radical which optionally contains 1–2 ether and/or ester groups, is free from olefinic double bonds, and contains 10–24 C atoms and

a) at least one aromatic radical or
b) at least one cycloaliphatic radical, at least 8 C atoms representing ring C atoms in the case of the cycloaliphatic radical,

as reactive diluents for oxidatively crosslinkable alkyd resins.

2. Use according to Claim 1, characterised in that R contains 10–18 C atoms.

3. Use according to Claims 1 and 2, characterised in that in the case of the cycloaliphatic radical at least 10 C atoms represent ring C atoms.

4. Methacrylic acid esters of the formula

$$CH_2{=}\overset{\displaystyle CH_3}{\overset{|}{C}}{-}COOR \qquad (II)$$

wherein

R represents $R^1{-}A{-}R^2$ and

$R^1$ denotes $(CH_2)_n$ $\quad \underset{\displaystyle CH_3}{\underset{|}{CH}} \quad$ or $\quad CH_2{-}\underset{\displaystyle CH_3}{\underset{|}{\overset{\displaystyle CH_3}{\overset{|}{C}}}}{-}CH_2$

A denotes an oxygen atom, a COO group or a single bond,
n denotes an integer from 1 to 3 and
$R^2$ denotes $\alpha$- or $\beta$-decalyl, tricyclo-[5.2.1.$0^{2.6}$]-dec-8- or -9-yl or tricyclo-[5-2-1-$0^{2.6}$]-dec-3- or 4-yl-methyl.

5. Process for the preparation of the methacrylic acid esters according to Claim 4 by esterifying methacrylic with $\alpha$- or $\beta$-decalol, with tricyclo-[5.2.1.$0^{2.6}$]-decan-8- or -9-ol or with tricyclo-[5.2.1.$0^{2.6}$]-decan-3- or -4-ylmethanol.

6. Process for the preparation of the methacrylic acid esters according to Claim 4 by reacting methacryloyl chloride with $\alpha$- or $\beta$-decalol, with tricyclo-[5-2-1-$0^{2.6}$]-decan-8- or -9-ol or with tricyclo-[5.2.1.$0^{2.6}$]-decan-3- or 4-ylmethanol.

7. Process for the preparation of the methacryclic acid esters according to Claim 4 by esterifying methyl methacrylate with $\alpha$- or $\beta$-decalol, with tricyclo-[5-2-1-$0^{2.6}$]-decan-8- or -9-ol or with tricyclo-[5.2.1.$0^{2.6}$]-decan-3- or -4-ylmethanol.

**Revendications**

1. Utilisation d'esters de l'acide méthacrylique répondant à la formule:

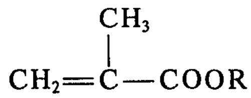

(I)

[dans laquelle:

R représente un radical organique monovalent contenant éventuellement 1 ou 2 groupes éther et/ou ester, qui ne comporte pas de doubles liaisons oléfiniques et contient 10 à 24 atomes de carbone et contient:

a) au moins un radical aromatique, ou
b) au moins un radical cycloaliphatique, dans lequel, dans le cas du radical cycloaliphatique, au moins 8 atomes de carbone constituent des atomes de carbone de cycle]

comme diluant réactif pour des résines alkydes réticulables par oxydation.

2. Utilisation selon la revendication 1, caractérisée en ce que R contient 10 à 18 atomes de carbone.

3. Utilisation selon les revendications 1 et 2, caractérisée en ce que, dans le cas du radical cycloaliphatique, au moins 10 atomes de carbone constituent des atomes de carbone de cycle.

4. Ester d'acide méthacrylique de formule:

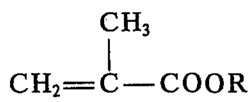

(II)

[dans laquelle:

R représente $R^1-A-R^2$, et

$R^1$ représente $(CH_2)_n$ 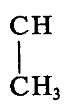 ou 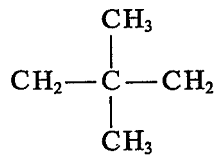

A représente un atome d'oxygène, un groupe COO ou une liaison simple,

n est un nombre entier valant 1 à 3, et

$R^2$ représente un groupe $\alpha$- ou $\beta$-décalyle, tricyclo[5.2.1.$0^{2.6}$]-dec-8- ou -9-yle ou tricyclo[5.2.1.$0^{2.6}$]-dec-3- ou -4-ylméthyle].

5. Procédé de préparation de l'ester d'acide méthacrylique selon la revendication 4, par estérification de l'acide méthacrylique avec l'$\alpha$- ou le $\beta$-décalol, avec le tricyclo[5.2.1.$0^{2.6}$]-décane-8- ou -9-ol avec le tricyclo[5.2.1.$0^{2.6}$]-décane-3- ou -4-ylméthanol.

6. Procédé de préparation de l'ester d'acide méthacrylique selon la revendication 4, par réaction du chlorure de méthacryloyle avec l'$\alpha$- ou le $\beta$-décalol, le tricyclo[5.2.1.$0^{2.6}$]-décane-8- ou -9-ol ou avec le tricyclo[5.2.1.$0^{2.6}$]-décane-3- ou -4-ylméthanol.

7. Procédé de préparation de l'ester d'acide méthacrylique selon la revendication 4, par transestérification du méthacrylate de méthyle avec l'$\alpha$ ou le $\beta$-décalol, avec le tricyclo[5.2.1.$0^{2.6}$]-décane-8- ou -9-ol ou avec le tricyclo[5.2.1.$0^{2.6}$]-décane-3- ou -4-ylméthanol.